# EUROPEAN PATENT APPLICATION

(11) **EP 4 349 654 A1**
(43) Date of publication of application: **10.04.2024**
(21) Application number: 23201308.6
(22) Date of filing: 02.10.2023
(51) Int. Cl.: B60R 3/02, E02F 9/08, E06C 5/04

(54) **IMPROVED LADDER ASSEMBLY FOR A WORK VEHICLE**

(30) Priority: 06.10.2022 IT 202200020616
(71) Applicant: CNH Industrial Italia S.p.A., 10156 Torino (IT)
(72) Inventor: CHIOCCOLA, Francesco, 10156 Turin (IT)
(74) Representative: CNH Industrial IP Department

(57) **Abstract**

Work vehicle (1) comprising a body (2) extending along a longitudinal axis (A) and a plurality of traction means (3) configured to allow movement of the vehicle (1) on ground, the body (2) defining a cab (4) for housing a driver of said vehicle (1), the vehicle (1) comprising a ladder assembly (5), the ladder assembly (5) comprising a ladder (6) and actuation means (7), the actuation means (7) being configured to move the ladder (6) from a first configuration wherein the ladder (6) is comprised between the traction means (3) along the longitudinal axis (A) and a second configuration wherein the ladder (6) is at least partially juxtaposed to one of the traction means (3).

## Description

### TECHNICAL FIELD

The present invention concerns a ladder assembly, in particular a ladder assembly for work vehicles.

The present invention finds its preferred, although not exclusive, application in earth moving machines such as scrapers. Reference will be made to this application by way of example below.

### BACKGROUND OF THE INVENTION

Work vehicles such as earthmoving machines usually comprises a cab that is carried by vehicle body and configured to house the driver.

As known, the vehicle body is movable on grounds via wheel or crawlers on a preset high above the ground. The cab is carried by vehicle body by the vehicle body further above the ground.

Accordingly, it is known to provide a laddery assembly for allowing the driver to jump in and descend from the vehicle cab.

However, usually, the cab is positioned in a front or rear portion of the vehicle body and therefore is placed usually above one of front/rear wheels while the ladder assembly is necessarily positioned between the front and rear wheels since these latter need to steer.

Accordingly, the driver needs to jump on the ladder and then on steps or protruding portions carried by vehicle body and to allow the translation of the driver towards the vehicle cab. The same operation is made when descending from the cab.

It is clear from the above that the driver has a risk of falling from the vehicle when passing from the grounds towards the cab. Indeed, the risk is furthermore increased due to the dirt environment in which the vehicle works.

The aforementioned problems is furthermore felt in earthmoving such as scrapers where the vehicle cab is placed in a very high position. Clearly, in such case, the risk for the driver of injuries are high.

It may be possible to displace the positioning of the ladder assembly. However, the gabarit of the vehicle will be considerably increased or the maneuverability decreased due to the reduction of allowable steering of the wheels.

Therefore, the need is felt to allow more comfortable and safer the passage of the driver to and from the cab of the work vehicle without compromising the maneuverability of the vehicle.

An aim of the present invention is to satisfy the above-mentioned needs in a cost-effective and optimized manner.

### SUMMARY OF THE INVENTION

The aforementioned aim is reached by a ladder assembly and a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic lateral view of a work vehicle comprising a ladder assembly according to a first operative configuration;

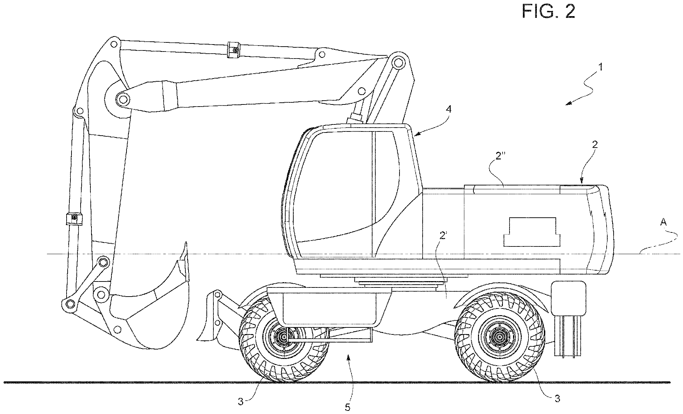

- Figure 2 is a schematic lateral view of a work vehicle comprising a ladder assembly according to a second operative configuration;
- Figure 3A includes two schematic top views of a work vehicle comprises a ladder assembly according to a first embodiment of the invention in the two operative configurations;

- Figure 3B is a rear schematic view of the work vehicle of figure 3A in second operative configuration;
- Figure 4A includes two schematic top views of a work vehicle comprises a ladder assembly according to a second embodiment of the invention in the two operative configurations;
- Figure 4B is a rear schematic view of the work vehicle of figure 4A in second operative configuration;
- Figure 5A includes two schematic top views of a work vehicle comprises a ladder assembly according to a third embodiment of the invention in the two operative configurations;
- Figure 5B is a rear schematic view of the work vehicle of figure 5A in second operative configuration;
- Figure 6A includes two schematic top views of a work vehicle comprises a ladder assembly according to a fourth embodiment of the invention in the two operative configurations;
- Figure 6B is a rear schematic view of the work vehicle of figure 6A; and
- Figures 7A to 7F are schematic representation of an actuation system for the ladder assembly for the work vehicle according to the different embodiments of the invention.

### DETAILED DESCRIPTION OF THE INVENTION

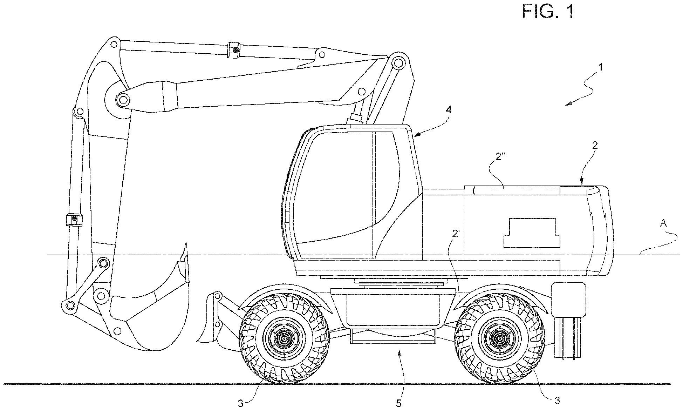

Figure 1 discloses a work vehicle 1 such a scraper. The work vehicle 1 comprises a vehicle body 2 that is movable on ground over traction means 3 such as wheels.

In particular, vehicle body 2 comprises an undercarriage 2' that is operatively connected to wheels and an upper body 2" that is carried by the undercarriage 2, e.g. in a movable manner.

As per se known, the vehicle body 2 extends along a longitudinal axis A and the upper body 2'' may be carried by a turntable assembly over the undercarriage 2'.

The vehicle body 2 further defines a cab 4 that is preferably carried by upper body 2' and is configured to define a space to house a driver. No further details will be provided for sake of brevity.

The vehicle 1 comprises a ladder assembly 5 configured to allow a driver to enter or exit the cab from/to the ground. In particular, the vehicle 1 may comprise a single ladder assembly 5 for a specific side of the vehicle 1 or a pair of ladder assembly 5 for both sides of vehicle 1.

The ladder assembly 5 essentially comprises a ladder 6 and actuation means 7. The ladder 6 may comprises a plurality of step portions 6', 6'' that are superposed one with respect to the other along a vertical direction with respect to the ground.

The ladder 6 is carried by the vehicle body 2 longitudinally between the front and rear wheels 3 and is faced to the vehicle body along a transversal direction, i.e. along a transversal axis B perpendicular to longitudinal axis A.

In particular, the actuation means 7 are configured to move the ladder 6 from a first configuration wherein it is comprised longitudinally between the front and rear wheels 3 of the vehicle 1 and transversally comprised within the extension of the wheels 3 and a second configuration wherein it is frontally juxtaposed, at least partially, over one of the wheels 3 of the vehicle 1 and transversally spaced with respect to this latter in order to guarantee the steering of such wheel 3.

In particular, the aforementioned spacing is dimensioned in order to guarantee a 35° rotation of the aforementioned wheel.

In particular, actuation means 7 comprise an actuation arrangement 8 and a leverage 9 operatively interposed between the actuation arrangement 8 and the ladder 6. In detail, the actuation means 7 are configured to provide an actuation force along longitudinal axis A to the leverage 9 that is configured to consequently move the ladder 6 from the first to the second configuration according to the direction of the force along the longitudinal axis A.

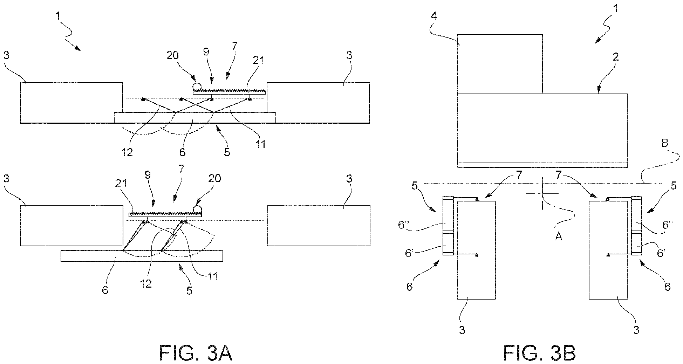

Making reference to figures 3A-3B a first embodiment of leverage 9 is described in the following.

The first embodiment of leverage 9 comprises a crankshaft mechanism provided with a crank 11 and a rod 12. In detail the crank 11 is connected to one side via a sliding hinge mechanism to a support 21 configured to move along longitudinal axis and to the opposite side to the ladder 6. The rod 12 is connected to one side via hinge mechanism to support 21 and to opposite side to the ladder 6. By dimensioning the crank 11 and the rod 12 it is possible, according to the longitudinal movement of support 21 along longitudinal axis A position the ladder 6 from the first configuration (figure 3A) to the second configuration (figure 3B). In particular, in the disclosed embodiment the support 21 is actuated by a rack mechanism 20.

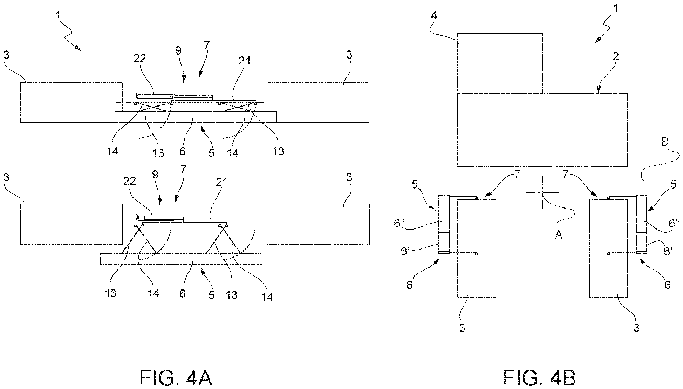

Making reference to figures 4A-4B a second embodiment of leverage 9 is described in the following.

The second embodiment of leverage 9 comprises a pantograph mechanism provided with a first and a second rods 13, 14. In detail the first and second rods 13, 14 are connected from one side to a sliding hinge connection to a support 21 and to the other side to the ladder 6. By dimensioning the two rods 13, 14 it is possible, according to the longitudinal movement of support 21 along longitudinal axis A position the ladder 6 from the first configuration (figure 4A) to the second configuration (figure 4A). In particular, in the disclosed embodiment the support 21 is actuated by hydraulic cylinder 22.

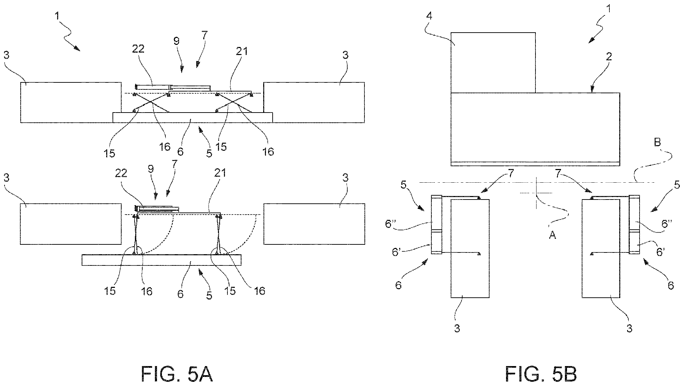

Making reference to figures 5A-5B a third embodiment of leverage 9 is described in the following.

The third embodiment of leverage 9 comprises a double carriage mechanism provided with a first and a second rods 15, 16. In detail the first and second rods 15, 16 are connected from one side to a sliding hinge connection to a support 21 while to the other side the first rod 15 is connected to the ladder 6 via a hinge connection and the second rod 16 is connected to the ladder 6. By dimensioning the two rods 15, 16 it is possible, according to the longitudinal movement of support 21 along longitudinal axis A position the ladder 6 from the first configuration (figure 5A) to the second configuration (figure 5B). In particular, in the disclosed embodiment the support 21 is actuated by hydraulic cylinder 22.

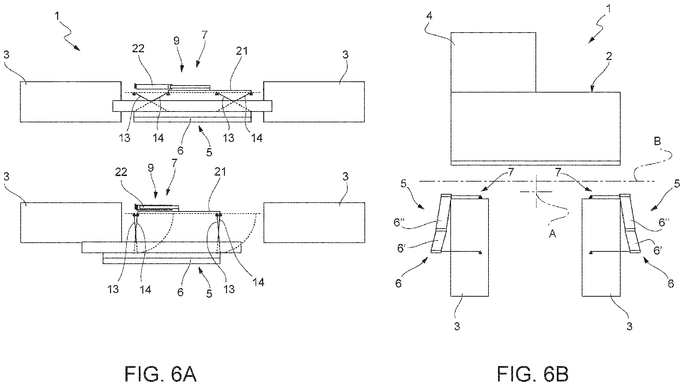

Making reference to figures 6A-6B a fourth embodiment of leverage 9 is described in the following.

The fourth embodiment of leverage 9 comprises a pantograph mechanism provided with a first and a second rods 13, 14 as the one of the second embodiment and, similarly, the support 21 is actuated by hydraulic cylinder 22. However, in such embodiment the ladder 6 is inclined with respect to vertical direction, in particular the lower portion 6' of the step 6 is farther with respect to vehicle body 2 along transversal direction with respect to an upper portion 6", in order to facilitate the use by the driver.

Furthermore, further embodiments may be provided wherein the lower portion 6' of the step 6 is movable with respect to the upper portion 6" in order to be vertically aligned in the first configuration of ladder 6 via proper connection between ladder portions 6', 6" and the leverage 9. For sake of brevity such embodiment is not described into detail.

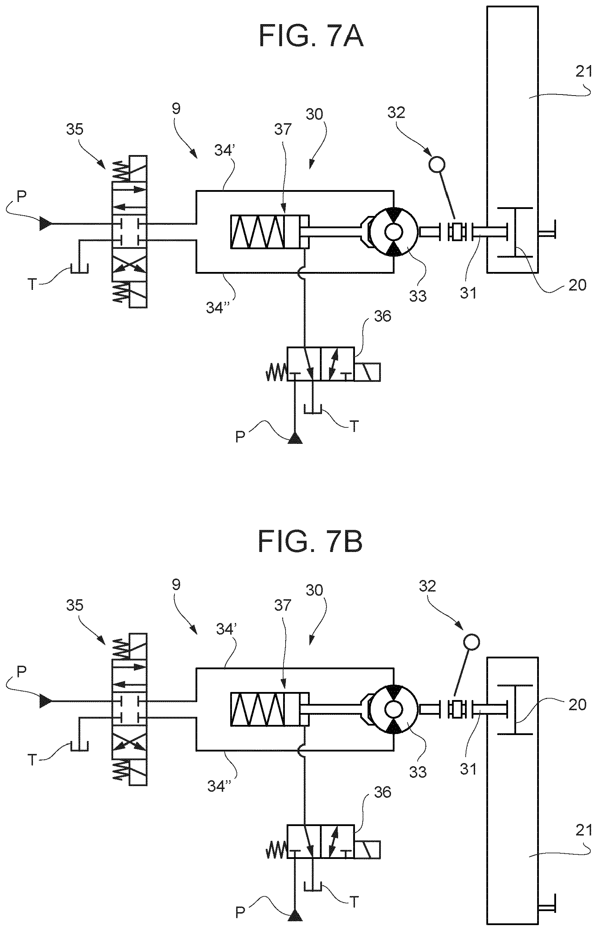

Figures 7A to 7F discloses an example of actuation system 7 for moving the portion 21 that carries leverage 9. In particular, the shown embodiment relates to the rack connection 20 according to the first embodiment but, clearly, similar arrangements may be done in the embodiment shown comprising a hydraulic cylinder.

In particular actuation system 7 comprises a hydraulic system 30 configured to actuate movement of portion 21 along longitudinal axis A, i.e. in the disclosed embodiment to make into rotation an actuation shaft 31 carrying the rack connection 20.

In particular the hydraulic system 31 comprises a hydraulic motor 33 whose operative shaft is connectable to the actuation shaft 31 via coupling means 32, such as manual coupling means 32, e.g. a clutch controllable by a lever.

The hydraulic motor 33 is fluidly connectable to a source P of fluid in pressure and to a discharge T of the work vehicle 1 via a first conduit 34' and a second conduit 34". In particular, the hydraulic motor 33 is fluidly connectable to the aforementioned source P and discharge T via valve means 35 trat are interposed on first and second conduits 34', 34''.

In detail, the valve means 35 may comprise an electroactuated valve. In further detail, valve means 35 may comprise a four ways - three positions valve configured to assume one of the following configurations:
- A first configuration wherein the source P is fluidly connected to the first conduit 34' and the discharge T is connected to the second conduit 34'';
- A second configuration wherein the source P is fluidly connected to the second conduit 34" and the discharge T is connected to the first conduit 34'; and
- A third configuration wherein both the source P and the tank T are not fluidly connected to the first or second conduits 34', 34''.

According to the first or second configuration, the hydraulic motor 33 will make rotate its operative shaft in a first or a second rotational direction along its axis.

The hydraulic system 31 can further comprise brake means configured to allow or deny the operation of hydraulic motor 33. In particular, such brake means may comprise hydraulic brake means 37.

The hydraulic brake means 37 are advantageously pressure released brake means. Accordingly, the hydraulic system 31 comprises valve means 36 configured to allow or deny the passage of fluid into brake means 37 to selectively release or brake hydraulic motor 33.

In detail, the valve means 36 may comprise an electroactuated valve. In further detail, valve means 36 may comprise a two ways - two positions valve configured to assume one of the following configurations:
- A first configuration wherein the source P is fluidly connected to the brake means 37 thereby allowing to release the hydraulic motor 33; and
- A second configuration wherein the discharge is fluidly connected to the brake means 37 thereby allowing to brake the hydraulic motor 33.

The operation of the embodiment of the invention as described above is the following.

In all embodiments of figures 3A/3B, 4A/4B, 5A/5B, 6A/6B the actuation system 7 moves portion 21 that carries leverage 9 to displace the ladder from the first to the second configuration thereby passing from a driving condition wherein the ladder is longitudinally comprised between the wheels and cannot interfere with their operation and a boarding condition wherein the ladder is placed frontally juxtaposed to one of wheels 3.

In particular, in the first embodiment the crank 11 is carried by portion 21 that pushed via rod 12 the ladder 6.

In the second embodiment, the first rod 13 is carried by portion 21 that pushes, thanks to the hinge provided by the second rod 14, the ladder 6.

In the third and fourth embodiment, similarly to the second one the first rod 13/15 is carried by portion 21 that pushes, thanks to the hinge provided by the second rod 14/16, the ladder 6.

The portion 21 is moved along the longitudinal axis A via rack mechanism 20 or directly by a piston 22.

In detail, the operation of the rack mechanism 20 will be described in the following, bearing in mind that a similar hydraulic circuit may be provided to control the hydraulic piston 22, e.g. by directly placing in fluid communication first and second conduits 34',34'' to the piston 22 without the presence of hydraulic motor 33.

Making reference to figures 7A-7F the operation of the hydraulic circuit is disclosed.

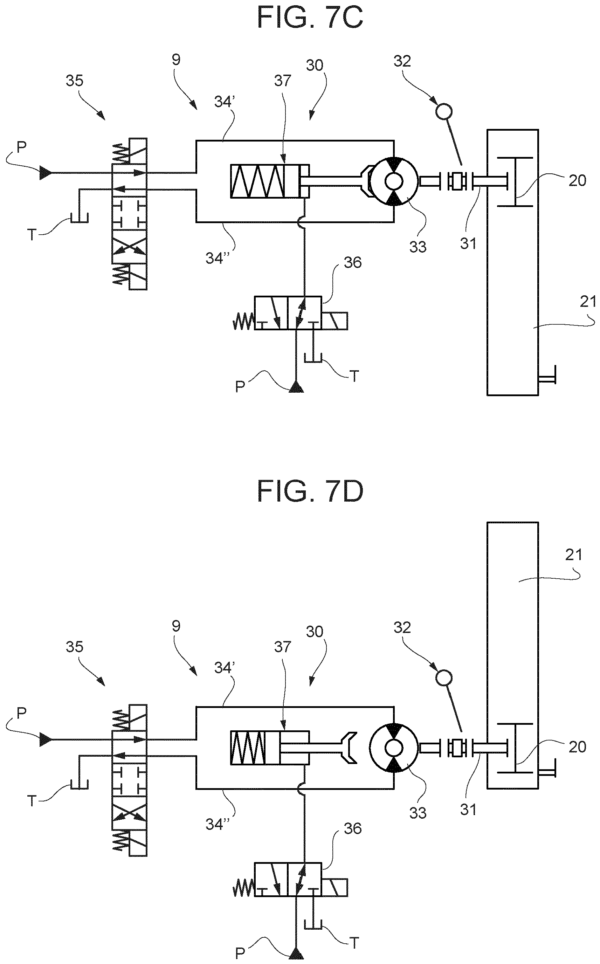

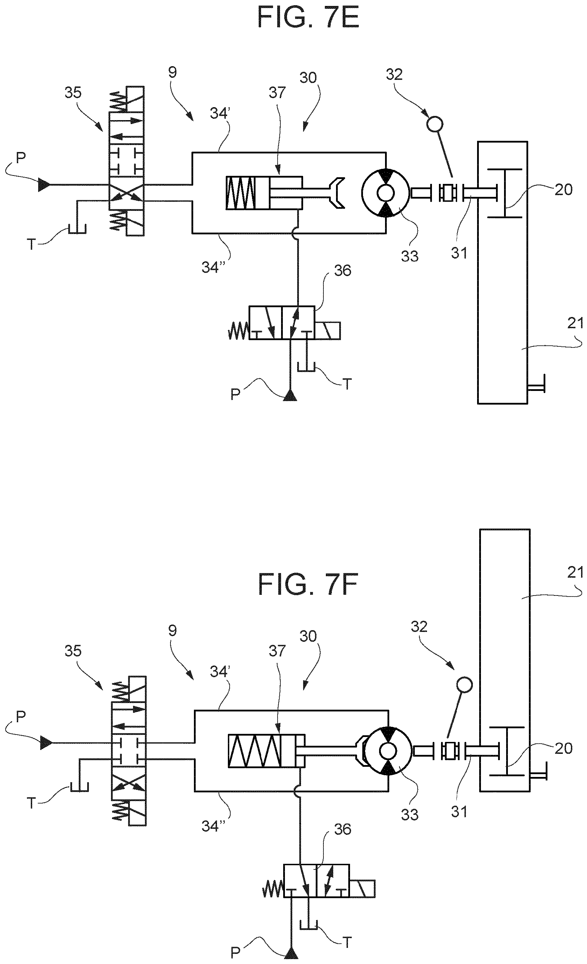

In figure 7A the work vehicle 1 is stopped and the ladder 6 is in the first configuration. Then, if the user wants to jump on the cab 4, it moves the coupling means 32 thereby decoupling shaft 31 from the hydraulic motor 33 shaft. In this way, the can manually move the ladder 6 to reach the second configuration directly applying the needed force to the support portion 21, e.g. via a handle. After that, the drive couples again the shaft 31 to hydraulic motor and the valve means 36 starts to release brake 37 (figure 7C). Then, when brake 37 is released, valve means 35 are controlled to carry hydraulic motor 33 via passage of fluid between source P and discharge T till the ladder is in the first configuration again (figure 7D). In such configuration, the valve means 35 may be placed so as to avoid connection between conduits 34', 34'' with source P and/or discharge T. Then, if the user wants to descend from cab, the hydraulic motor 33 is controlled in opposite way via valve means 35 (figure 7E) till the ladder 6 is placed in the second configuration and allow the user to descend from the cab 4. After that, the valve means 35 isolate conduits 34', 34'' and the user may act to coupling means to move manually the ladder 6 to come back to the first configuration (figure 7F).

According to the above, the present invention is further related to a control method for moving a ladder of a work vehicle for allowing a driver to jump on a cab as described above and comprising the following steps:
i) Decoupling the support 21 from the actuation means 7;
ii) Moving the ladder 6 manually from the first to the second configuration;
iii) Couple support 21 to actuation means 7 to lock the ladder in the second configuration;
iv) When the driver is jumped on the cab, control actuation means 7 to carry the ladder 6 back in the first configuration.

Similarly, the present invention is related to a control method for moving a ladder of a work vehicle for allowing a driver to descend from cab as described above and comprising the following steps:
v) Control actuation means 7 to carry the ladder 6 from the first configuration to the second configuration;
vi) When the driver is descended from the cab, decoupling the support 21 from the actuation means 7;
vii) Moving the ladder 6 manually from the second to the first configuration;
viii) Couple support 21 to actuation means 9 to lock the ladder in the first configuration.

In view of the foregoing, the advantages of the ladder assembly and work vehicle according to the invention are apparent.

Thanks to the proposed ladder assembly it is possible to allow the driver to jump or descend to/from the cab in a comfortable way without increasing the possibility of injuries.

Furthermore, the above positive effect is achieved without compromising the steering capability of the vehicle or increasing the gabarit of the vehicle.

Moreover, the possibility of using different typology of leverage and actuation means allow a great versatility allowing to use the ladder assembly in different vehicle typology and with different movements.

Furthermore, the proposed system can be installed in vehicles that are not provided with a ladder or by simply substitution of the existing one.

Moreover, as demonstrated, the actuation of the ladder system may be easily automatized thereby increasing the driver comfort and reducing waste of time.

It is clear that modifications can be made to the described ladder assembly and work vehicle which do not extend beyond the scope of protection defined by the claims.

For example, as said, different typologies of leverage and actuation means may be provided. For instance, electromechanical means may be used instead of the proposed hydraulic assembly with the same purpose. Furthermore, such electromechanical means or a different hydraulic circuit may be configured to allow both extraction and retraction of the ladder in all operative phases.

Clearly only one or more ladder assembly 5 may be provided on the vehicle side.

Furthermore, the provided ladder assembly may be provided to different typologies of work vehicles that need its advantageous effects.

## Claims

1. Work vehicle (1) comprising a body (2) extending along a longitudinal axis (A) and a plurality of traction means (3) configured to allow movement of the vehicle (1) on ground, said body (2) defining a cab (4) for housing a driver of said vehicle (1), said vehicle (1) comprising a ladder assembly (5), said ladder assembly (5) comprising a ladder (6) and actuation means (7), said actuation means (7) being configured to move said ladder (6) from a first configuration wherein said ladder (6) is comprised between said traction means (3) along said longitudinal axis (A) and a second configuration wherein said ladder (6) is at least partially juxtaposed to one of said traction means (3).

2. Work vehicle according to claim 1, wherein said ladder (6) is spaced from said traction means (3) in order to guarantee at least 35° of steering of said traction means (3).

3. Work vehicle according to claim 1 or 2, wherein said ladder (6) is transversally comprised within the extension of said traction means (3) along a transversal axis (B) perpendicular to said longitudinal axis (A) in said first configuration.

4. Work vehicle according to any of the preceding claims, wherein said actuation means (7) comprises an actuation arrangement (8) and a leverage (9), said leverage (9) being operatively interposed between said actuation arrangement (8) and said ladder (6), said actuation arrangement (8) being configured to provide a force along said longitudinal axis (A) to said leverage (9), said leverage (9) being configured to move said ladder (6) from said first to said second configuration according to the direction of said force imparted by said actuation arrangement (8).

5. Work vehicle according to claim 4, wherein said leverage (9) comprises a support (21) moved by said actuation arrangement (8) along said longitudinal axis (A) and a crankshaft mechanism (11, 12) connecting said ladder (6) to said support (21).

6. Work vehicle according to claim 4, wherein said leverage (9) comprises a support (21) moved by said actuation arrangement (8) along said longitudinal axis (A) and a pantograph mechanism (13, 14) connecting said ladder (6) to said support (21).

7. Work vehicle according to claim 4, wherein said leverage (9) comprises a support (21) moved by said actuation arrangement (8) along said longitudinal axis (A) and a double carriage mechanism (15, 16) connecting said ladder (6) to said support (21).

8. Work vehicle according to any of claims 4 to 7, wherein said ladder (6) comprises a lower and an upper portions (6', 6'') wherein the lower portion (6') extends farther with respect to vehicle body (2) along said transversal direction with respect to said upper portion (6").

9. Work vehicle according to claim 6 when depending on any of claims 5 to 7, wherein said leverage (9) is configured to displace said lower and upper portions (6', 6") in order to be vertically aligned in said first configuration.

10. Work vehicle according to any of claims 4 to 9, wherein said actuation arrangement (8) comprises a hydraulic circuit (30) for moving said support (21).

11. Work vehicle according to claim 10, wherein said hydraulic circuit (30) actuates a mechanism (20) operatively interposed to said support (21).

12. Work vehicle according to claim 11, wherein said hydraulic circuit (30) comprises a hydraulic motor (33) hydraulically connectable via valve means (35) to a source (P) of fluid in pressure and/or to a discharge (T), said hydraulic motor (33) actuating said mechanism (20).

13. Work vehicle according to claim 12, further comprising brake means (37) configured to selectively brake said hydraulic motor (33).

14. Control method for moving a ladder of a work vehicle for allowing a driver to jump on a cab according to any of claims 4 to 13, said method comprising the following steps:
i) Decoupling support (21) from the actuation means (7);
ii) Moving the ladder (6) manually from the first to the second configuration;
iii) Couple support (21) to actuation means (7) to lock the ladder in the second configuration;
iv) When the driver is jumped on the cab, control actuation means (7) to carry the ladder 6 back in the first configuration.

15. Control method for moving a ladder of a work vehicle for allowing a driver to descend from a cab according to any of claims 4 to 13, said method comprising the following steps:
v) Control actuation means (7) to carry the ladder (6) from the first configuration to the second configuration;
vi) When the driver is descended from the cab, decoupling the support (21) from the actuation means (7) ;
vii) Moving the ladder (6) manually from the second to the first configuration;
viii) Couple support (21) to actuation means (7) to lock the ladder in the first configuration.
